Europäisches Patentamt

European Patent Office

Office européen des brevets

(11) Numéro de publication: **0 005 402**
**A1**

(19)

(12) **DEMANDE DE BREVET EUROPEEN**

(21) Numéro de dépôt: 79400278.2

(22) Date de dépôt: 27.04.79

(51) Int. Cl.²: **B 65 G 47/86,** B 67 C 3/24

(30) Priorité: 03.05.78 FR 7813167

(71) Demandeur: **Bedin, Jean, 251, rue Camille Godard, F-33000 Bordeaux (FR)**

(43) Date de publication de la demande: 14.11.79
**Bulletin 79/23**

(72) Inventeur: **Bedin, Jean, 251, rue Camille Godard, F-33000 Bordeaux (FR)**

(74) Mandataire: **Bloch, Robert, 39 avenue de Friedland, F-75008 Paris (FR)**

(84) Etats contractants désignés: **BE CH DE GB IT LU NL SE**

(54) **Dispositif de transfert de bouteilles ou flacons, sur les machines de conditionnement.**

(57) L'invention a pour objet un dispositif de transfert de récipients, tels que bouteilles ou flacons, sur les machines de conditionnement.

Le dispositif de l'invention comporte des moyens agencés (7, 7', 8, 8', 9, 9', 32, 32') pour venir en prise uniquement avec les goulots, ou bagues des bouteilles (34), ou flacons, à transférer, entraîner ainsi ces récipients par le simple déplacement des dits moyens et les libérer en des points déterminés.

ACTORUM AG

-1-

## Dispositif de transfert de bouteilles ou flacons, sur les machines de conditionnement.

Dans l'industrie du conditionnement des liquides, il est fréquent d'utiliser une même installation pour l'emplissage, le bouchage et l'habillage de bouteilles ou de flacons de formats différents.

Le transfert des bouteilles entre les différents éléments de l'installation est assuré au moyen de systèmes de guidage qui comportent des alvéoles de dimensions correspondant à celles du corps des bouteilles à transférer et qui sont conçus pour recevoir des bouteilles dont le diamètre est compris entre d'étroites limites : c'est le cas des dispositifs appelés croix de sortie ou d'entrée. Pour le traitement de bouteilles dont le format n'entre pas dans ces limites, il est nécessaire de changer le système de guidage sur chaque machine.

Or on sait que, contrairement aux corps des bouteilles, les diamètres des goulots et des bagues diffèrent peu d'un type de bouteille à un autre.

L'invention a donc pour objet un dispositif de transfert caractérisé par le fait qu'il comporte des moyens agencés pour venir en prise uniquement avec des bouteilles ou flacons à transférer, entraîner ainsi ces récipients par le simple déplacement de ces moyens et les libérer en des points déterminés.

Dans une forme de réalisation particulièrement avantageuse, les moyens de prise sont des pinces agencées pour se refermer sur le goulot des bouteilles ou flacons à transférer.

Un tel dispositif à pinces présente de nombreux avantages.

-2-

Les bouteilles, étant maintenues symétriquement par les pinces, peuvent être positionnées avec une grande précision, ce qui évite les jeux de guidage inévitables et souvent importants que présentent les systèmes actuellement utilisés.

Les dispositifs à pinces n'ont pas seulement un rôle d'entraînement, mais aussi de centrage et de support des bouteilles. On peut donc supprimer les autres éléments de guidage et de support.

On sait que, dans les croix d'entrée et de sortie classiques, les bouteilles sont logées dans les alvéoles de la croix, mais sont, en outre, guidées par des pièces dont les parois sont suivies par les corps de bouteilles et les bouteilles reposent par leur fond sur un support, ou plaque d'usure.

La suppression de ces éléments permet de réduire nettement l'espace entre les dispositifs de transfert d'entrée et de sortie d'une machine, entraînant un gain de place non négligeable et surtout une amélioration du rendement tant sur le plan quantitatif que qualitatif.

Les pinces peuvent être animées de mouvements verticaux d'une amplitude suffisante pour compenser les différences de niveau qui peuvent exister entre la chaîne d'amenée des bouteilles et le plateau de la machine.

Avec de tels dispositifs à pinces, il n'est pas nécessaire de changer l'outillage de guidage et d'entraînement pour passer d'un format de bouteilles à un autre. En effet, étant réglables en hauteur, ils peuvent accepter des bouteilles de hauteurs différentes. De plus, les pinces ont la capacité de saisir des bouteilles de formes très différentes.

Dans une forme de réalisation, les pinces peuvent être constituées par deux bras pivotants dont le pivotement peut être commandé par un seul galet de came.

-3-

A titre nullement limitatif, on a représenté au dessin annexé un exemple de réalisation d'un dispositif selon l'invention, dessin sur lequel :

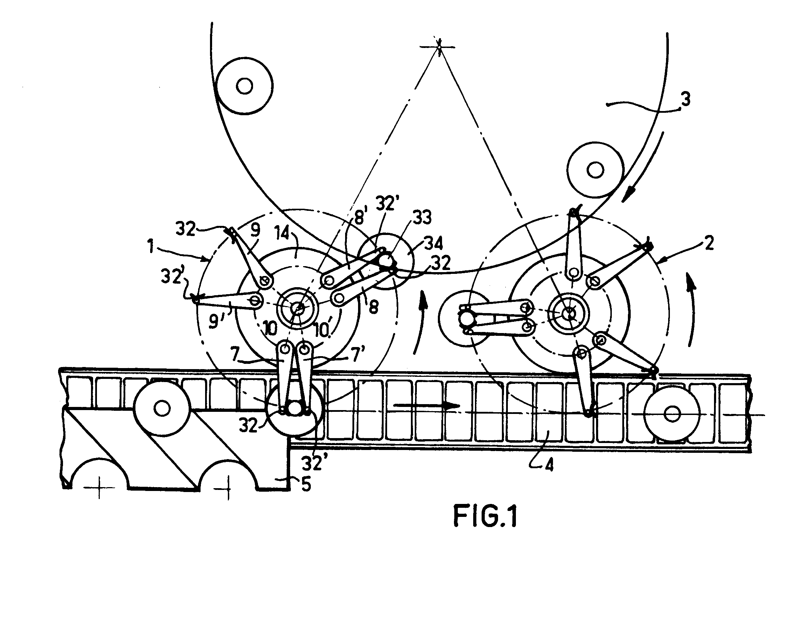

- la figure 1 est une vue schématique en plan d'un ensemble d'une croix d'entrée et d'une croix de sortie à pinces ;

- la figure 2 est une vue à plus grande échelle, en coupe axiale d'une des croix de la figure 1, et

- la figure 3 est une vue encore à plus grande échelle, d'une des pinces de ces croix de transfert.

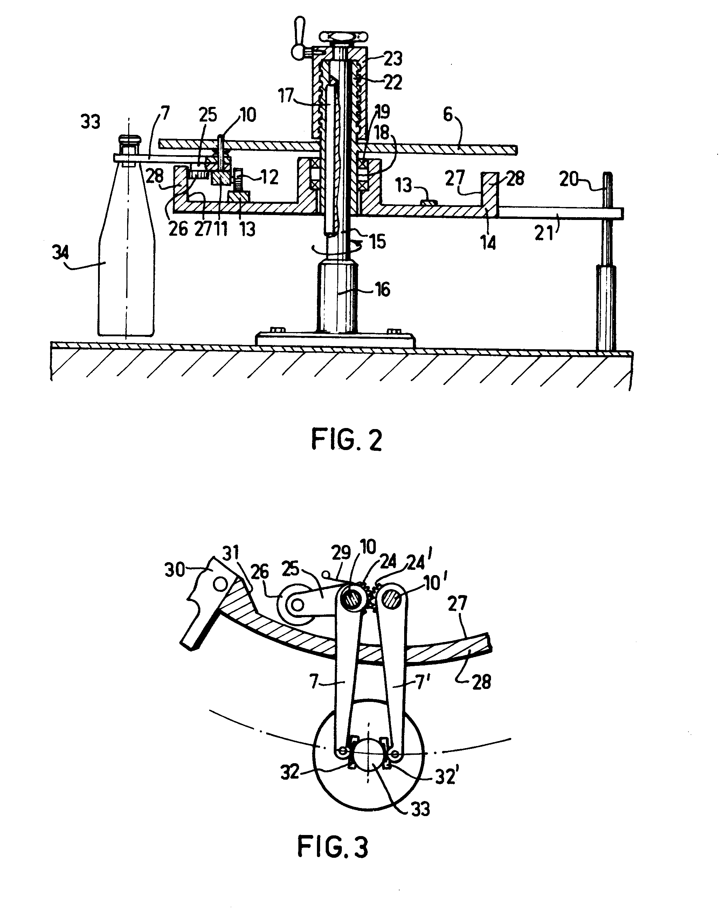

Dans l'exemple représenté au dessin, les deux dispositifs de transfert, ou croix d'entrée et de sortie 1 et 2 sont montés entre le plateau 3 d'une machine de conditionnement de liquide dans des bouteilles et le tapis 4 sur lequel ces bouteilles sont réparties par une vis de sélection 5. Les croix 1 et 2 sont constituées chacune par un plateau 6 (fig. 2) portant trois pinces elles-mêmes constituées chacune par deux bras, 7, 7', 8, 8', 9, 9' clavetés sur des axes 10, 10'. Ces axes 10, 10' tourillonnent dans des trous du plateau 6 et dans une pièce 11 solidaire d'un galet 12. Ce galet 12 roule sur une came 13 portée par le fond d'un plateau creux 14 parallèle au plateau 6. Le plateau 6 est monté sur l'arbre 15 d'axe vertical pouvant être entraîné en rotation dans la crapaudine 16. Le plateau 6 est relié à l'arbre 15 par une clavette 17 grâce à laquelle il peut être entraîné en rotation par l'arbre et coulisser axialement sur lui. Le plateau 6 se prolonge vers le bas par un manchon 18 sur lequel est monté le plateau 14 par l'intermédiaire du roulement 19, ledit plateau 14 pouvant être ainsi entraîné en translation axiale avec le plateau 6, en étant guidé par une tige 20 enfilée sur un bras 21 solidaire du plateau 14.

Le plateau 6 se prolonge vers le haut par un manchon 22 fileté sur lequel est en prise un écrou 23 solidaire de l'arbre 15. Sur chaque arbre 10, 10' est monté un secteur denté 24, 24' respecti-

-4-

vement engrenant l'un avec l'autre, et sur l'arbre 10 est clavetée une biellette 25 porteuse d'un galet 26 qui peut rouler contre la face intérieure 27 du rebord vertical 28 du plateau 14. Un ressort 29 rappelle en permanence le bras 7 vers le bras 7', donc le galet 26 contre la paroi 27. Cette paroi 27 présente sur sa périphérie une partie 30 en saillie vers l'intérieur reliée à la paroi 27 par une rampe 31. Quand le galet 26 roule sur cette partie 30, les deux bras 7,7' sont largement écartés l'un de l'autre, alors que, lorsque le galet 26 roule sur la paroi 27 proprement dite, les extrémités 32,32' sont en appui contre le goulot 33 de la bouteille 34 à transférer.

Le fonctionnement du dispositif de transfert résulte immédiatement de ce qui précède.

Les bouteilles sont amenées par la chaîne transporteuse 4 à des intervalles déterminés par la vis de sélection 5. Au voisinage du point A, la pince 7,7' se referme contre les parois du goulot de la bouteille, le galet 26 passant de l'appui contre la partie 30 à l'appui contre la partie 27 du bord 28. Lorsque le galet 12 passe du contact avec la partie de plus faible épaisseur de la came 13 au contact avec la partie de plus forte épaisseur de cette came, la pince 7,7' se soulève légèrement en soulevant avec elle la bouteille et la maintient soulevée pendant son transfert jusqu'au voisinage du point B.

La pince 7,7' s'ouvre alors grâce au passage du galet 26 contre la partie 30 de la paroi 28 et la bouteille est lâchée et prise en relais par le plateau 3 de la machine.

En A et B, la bouteille est amenée et reprise en charge tangentiellement à la trajectoire en arc de cercle que lui imprime la croix à pinces 1.

-5-

La bouteille, à la sortie de la machine, peut être à nouveau distribuée dans une autre croix à pinces 2, dite croix de sortie, semblable à la croix d'entrée et qui la place sur la chaîne transporteuse 4.

Revendications de brevet

1.- Dispositif de transfert de bouteilles et flacons sur les machines de conditionnement, caractérisé par le fait qu'il comporte des moyens agencés pour venir en prise uniquement avec les goulots, ou bagues des bouteilles, ou flacons, à transférer, entraîner ainsi ces récipients par le simple déplacement desdits moyens et les libérer en des points déterminés.

2.- Dispositif selon la revendication 1, dans lequel les moyens de prise sont des pinces agencées pour se refermer sur le goulot des bouteilles ou flacons à transférer.

3.- Dispositif selon la revendication 2, dans lequel les pinces sont montées de façon à pouvoir être animées de mouvements verticaux.

4.- Dispositif selon l'une des revendications 2 ou 3, dans lequel les pinces sont constituées par deux bras pivotants.

5.- Dispositif selon l'une des revendications 1 à 4, dans lequel les pinces sont montées rotatives.

6.- Dispositif selon l'une des revendications 4 ou 5, dans lequel les bras sont reliés de façon à pivoter simultanément en sens inverse et le pivotement est commandé par un galet de came relié à l'un des bras par une biellette.

FIG.1

00005402

FIG. 2

FIG. 3

00005402

# RAPPORT DE RECHERCHE EUROPEENNE

Office européen
des brevets

Numéro de la demande

EP 79 400 278.2

## DOCUMENTS CONSIDERES COMME PERTINENTS

| Catégorie | Citation du document avec indication, en cas de besoin, des parties pertinentes | Revendication concernée |
|---|---|---|
| | US - A - 3 043 447 (A.G. LAUCK et al.)<br>* colonne 2, ligne 43 à colonne 5, ligne 19 *<br><br>-- | 1-6 |
| | DE - B - 2 340 796 (INDUSTRIAL AUTO-MATION CORP.)<br>* colonne 3, ligne 50 à colonne 4, ligne 51; fig. 3 et 4 *<br><br>-- | 1,2,4,5 |
| | DE - A - 1 556 660 (RAVENHEAD GLASS LTD.)<br>* page 10, ligne 16 à page 12, ligne 5 *<br><br>-- | 3-6 |
| A | FR - A - 1 347 328 (OWENS ILLINOIS GLASS COMPANY)<br>* ensemble de brevet *<br><br>-- | 1 |
| A | US - A - 3 783 992 (COOK)<br>* ensemble de brevet *<br><br>---- | 1 |

### CLASSEMENT DE LA DEMANDE (Int. Cl.²)

B 65 G 47/86
B 67 C 3/24

### DOMAINES TECHNIQUES RECHERCHES (Int. Cl.²)

B 65 G 47/00
B 67 C 3/00

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| Berlin | 03-07-1979 | SIMON |

OEB Form 1503.1 06.78